# EUROPÄISCHE PATENTSCHRIFT

(11) **EP 2 161 640 B1**
(45) Veröffentlichungstag und Bekanntmachung des Hinweises auf die Patenterteilung: **12.09.2012**
(21) Anmeldenummer: 09166029.0
(22) Anmeldetag: 21.07.2009
(51) Int. Cl.: G05B 23/02

(54) **Verfahren zur Überwachung der Funktionsfähigkeit eines Stellgeräts mit pneumatischem Antrieb**
Method for monitoring the functionality of a positioning device with pneumatic drive
Procédé de surveillance du fonctionnement d'un appareil de réglage doté d'un entraînement pneumatique

(30) Priorität: 04.09.2008 DE 102008045775
(43) Veröffentlichungstag der Anmeldung: 10.03.2010
(73) Patentinhaber: Samson AG, 60314 Frankfurt (DE)
(72) Erfinder: Kiesbauer, Dr. Jörg, 64859, Eppertshausen (DE); Vnucec, Domagoj, 68165, Mannheim (DE)
(74) Vertreter: Borchert, Uwe Rudolf

(56) Entgegenhaltungen:
- WO-A1-2007/087030

## Beschreibung

Die Erfindung betrifft ein Verfahren zur Überwachung der Funktionsfähigkeit eines Stellgerätes mit einem pneumatischen Antrieb gemäß der im Oberbegriff des Anspruches 1 angegebenen Art sowie eine Vorrichtung zur Durchführung des Verfahrens.

In sicherheitsgerichteten Kreisen, insbesondere in der chemischen Industrie oder in Kraftwerken, müssen Sicherheitsventile regelmäßig auf ihre Funktionsfähigkeit überprüft werden. Sicherheitsventile werden nämlich nur selten benutzt, da sie nur für den Notfall vorgesehen sind.

Bekannt sind pneumatische Antriebe, die als ein Stellantrieb eines Sicherheitsventils dienen. Sicherheitsventile werden in der Regel in einem Sicherheitskreis durch ein Magnetventil so angesteuert, dass dieser in einem Notfall durch Abfall der Versorgungsspannung den pneumatischen Antrieb entlüftet, so dass das Sicherheitsventil in eine Sicherheitslage bewegt wird. Die Bewegung in die Sicherheitslage wird in bekannter Weise durch einen Energiespeicher bewirkt, der durch in dem Antrieb angeordnete Federn realisiert ist.

Für eine korrekte Funktion des Sicherheitsventils müssen sowohl das eigentliche Stellgerät als auch das Magnetventil zuverlässig arbeiten. Zur Überprüfung der Funktionsfähigkeit eines Stellgliedes in einem Stellsystem ist das sogenannte Partial-Stroke-Testverfahren bekannt.

Ein Verfahren, das dieses Testverfahren nutzt, ist beispielsweise in der DE 10 2005 004 477 A1 beschrieben. Dabei wird ein Antriebselement des Stellglieds kurzzeitig über einen Teil eines Stellweges bewegt, um seine Funktionsfähigkeit zu überprüfen. Ein Überschwingen wird vermieden, in dem das Antriebselement lediglich innerhalb zugelassener Grenzen, beispielsweise mittels eines Anschlags, bewegbar ist. Bekannte Partial-Stroke-Testverfahren nutzen einen Stellungsregler, um mittels Teilhubbewegungen auf die korrekte Funktionsfähigkeit des Stellgerätes zu schließen.

Eine weitere Vorrichtung zur Überprüfung eines Sicherheitsventils ist aus der GB 2 372 087 A bekannt. Ein Stellventil wird dabei mit einem Testverfahren bis zu einem festgelegten Punkt bewegt. Hierbei wird der Test durch einen Laptop oder Computer oder durch einen Knopf ausgelöst. Dafür wird wie im Notfall ein Magnetventil abgeschaltet, jedoch nach einer festgelegten Zeit wiedereingeschaltet. Druck oder Durchflusssensoren erkennen aufgrund von Änderungen im Prozessmedium die Funktionsfähigkeit des Sicherheitsventils, so dass eine Fehlermeldung bei Auftreten eines Fehlers mittels Lampen oder eines Bildschirms angezeigt wird.

Mit diesen Tests kann überprüft werden, ob ein Ventil unzulässig blockiert ist, eine Feder des Stellgliedes bzw. des Ventils gebrochen ist, Korrosion an einer Ventilkugel vorliegt oder eine unerwünschte Kristallbildung vorhanden ist.

Alle diese Tests beziehen sich auf die Funktionsfähigkeit des Stellgerätes und sind nicht geeignet, eine Fehlfunktion des dem Stellgerät zugeordneten Magnetventils zu überprüfen.

Aus der WO 2007/087030 A1 ist eine Vorrichtung bekannt, die eine Fehlfunktion des Magnetventils überprüft. Die Vorrichtung umfasst hierzu einen Stellungsregler, der zwei Ausgänge - doppelt wirkender Regler - und zwei Drucksensoren aufweist. Das Magnetventil ist über eine erste pneumatische Verbindung mit dem Stellungsregler eines Stellgerätes verbunden, wobei dort am Stellungsregler ein erster Drucksensor vorhanden ist. Das Magnetventil ist mit dem pneumatischen Antrieb durch eine zweite pneumatische Verbindung verbunden, wobei an dieser Verbindung am Stellungsregler ein zweiter Drucksensor angeordnet ist. Die Vorrichtung umfasst eine Schaltung zur Ansteuerung eines einfach wirkenden pneumatischen Antriebs. Diese sieht vor, den in diesem Fall normalerweise ungenutzten zweiten Ausgang des Stellungsreglers mit der pneumatischen Verbindung zwischen Magnetventil und Antriebsvolumen zu verbinden. Zum Testen des Magnetventils wird dieser kurzzeitig abgeschaltet, so dass eine Druckänderung bzw. Differenzdruckänderung der Drucksensoren im Stellungsregler ausgewertet werden kann. Je nach Größe der gemessenen Druckänderungen des Drucks im pneumatischen Antrieb bzw. in der pneumatischen Verbindung zwischen Magnetventil und pneumatischem Antrieb kann der Stellungsregler auf die Funktionsfähigkeit des Magnetventils schließen.

Nachteilig an dieser Anordnung ist die Notwendigkeit eines doppelt wirkenden Stellungsreglers für einen einfach wirkenden Antrieb. Vorteilhaft wäre aber ein einfach wirkender Stellungsregler für einen einfach wirkenden Antrieb. Weiterhin ist eine zusätzliche pneumatische Verbindung des zweiten Stellungsreglerausgangs notwendig und erhöht somit den Aufwand bei der Erstellung der pneumatischen Verbindungsleitungen. Jede zusätzliche pneumatische Verbindung stellt außerdem eine mögliche Fehlerquelle dar.

Zudem besteht bei nicht vorhandenem Drucksensor zwischen dem Magnetventil und dem pneumatischem Antrieb das Problem, dass eine kurzzeitige Druckänderung während eines Aus- und Einschaltens des Magnetventils nicht feststellbar ist. Insbesondere kann ein einfach wirkender Stellungsregler, auch wenn dieser einen Drucksensor zur Messung des Drucks des pneumatischen Ausgangs umfasst, nicht eine Druckänderung zwischen Magnetventil und pneumatischem Antrieb während eines Aus- und Einschaltens des Magnetventils erfassen, da das Schalten des Magnetventils die pneumatische Verbindung zwischen Stellungsregler und pneumatischem Antrieb unterbricht.

Der Erfindung liegt die Aufgabe zugrunde, ein Verfahren und eine Vorrichtung der im Oberbegriff des Anspruchs 1 angegebenen Art derart weiterzubilden, dass eine Überprüfung der Funktionsfähigkeit eines Magnetventils in einfacher und kostengünstiger Weise möglich ist.

Diese Aufgabe wird für das Verfahren durch die kennzeichnenden Merkmale des Anspruches 1 und für die Vorrichtung durch die Merkmale des Anspruches 9 gelöst.

Durch die Erfindung ist eine Überprüfung des Magnetventils ohne die eingangs genannten Nachteile möglich.

Der Erfindung liegt die Erkenntnis zugrunde, dass es in überraschender Weise möglich ist, mit nur einer Druckmessung auf der Eingangsseite des Magnetventils eine auftretende Druckänderung auf der Ausgangsseite des Magnetventils zu detektieren. Indem praktisch ein Zeitraum nach Beendigung des Aus- und Einschaltens zur Untersuchung eingesetzt wird, ist es möglich, aufgrund des Druckausgleichs einer Druckänderung auf der Eingangsseite des Magnetventils auf eine vorher stattgefundene Druckänderung auf der Ausgangsseite des Magnetventils zurückzuschließen.

Wenn nämlich das Magnetventil beim Abschalten nicht entlüftet, wird nach Wiedereinschalten kein Druckabfall vor dem Magnetventil entstehen. Wenn andererseits das Magnetventil abschaltet, aber anschließend nicht korrekt wiedereinschaltet, so wird ein Druckabfall vor dem Magnetventil entstehen, wobei der Druck nicht wieder ansteigen wird.

Der Nachweis der Funktionsfähigkeit des Magnetventils findet damit indirekt und zeitlich erst nach Beendigung des Aus- und Einschaltens des Magnetventils statt. Aufgrund der kurzen Schaltzeit des Magnetventils hat dies jedoch in der Praxis kein Nachteil.

Nach der Erfindung wird das Magnetventil mit einer Schaltzeit aus- und wieder eingeschaltet. Die Schaltzeit des Magnetventiles wird erfasst, wobei einerseits die Schaltzeit so kurz ist, dass die Position des Stellgeräts im Wesentlichen konstant bleibt und andererseits jedoch so lang ist, dass nach dem Wiedereinschalten des Magnetventils ein Druckabfall in der ersten pneumatischen Verbindung vor dem Magnetventil vorhanden ist.

Gemäß einer Ausführungsform der Erfindung erfolgt die Druckmessung nur in der ersten pneumatischen Verbindung. Die erfasste Schaltzeit wird eingesetzt, um die Funktionsfähigkeit des Magnetventiles anhand eines Druckabfalls in der ersten pneumatischen Verbindung zu prüfen.

Vorzugsweise wird in einem ersten Schritt das Magnetventil mit variierender Zeitlänge aus- und wieder eingeschaltet. Dabei werden mehrere Referenzdaten aufgenommen, die mindestens eine Information zu der Schaltzeit des Magnetventils enthalten. Mindestens die Schaltzeit wird gespeichert, bei der die Position des Stellgeräts im Wesentlichen konstant bleibt und nach dem Wiedereinschalten des Magnetventils der Druckabfall erfolgt. In einem zweiten Schritt wird eine Prüfroutine durchgeführt, welche das Magnetventil für die Dauer der im ersten Schritt gespeicherten Schaltzeit aus- und wieder einschaltet, wobei die auftretende Druckänderung in der ersten pneumatischen Verbindung vor dem Magnetventil gemessen wird, so dass aus dieser Druckänderung auf den Zustand des Magnetventils geschlossen wird. Die Änderung des Drucks in der ersten pneumatischen Verbindung vor dem Magnetventil wird als gemessenes Steuersignal genommen, aus dem der Zustand des Magnetventils bestimmt werden kann. Eine Statusmeldung zur Beschreibung des Zustands des Magnetventils, insbesondere in visueller oder elektrischer Form, wird dann erzeugt.

Insbesondere wird dabei der Druckabfall in der pneumatischen Verbindung während des ersten Schritts gespeichert. Die im zweiten Schritt auftretende Druckänderung in der ersten pneumatischen Verbindung wird mit dem gespeicherten Druckabfall verglichen. Aus dem Unterschied beider Druckänderungen wird eine Statusmeldung ausgegeben.

Gemäß einer weiteren Ausführungsform der Erfindung wird die im zweiten Schritt auftretende Druckänderung in der ersten pneumatischen Verbindung vor dem Magnetventil mit dem gespeicherten Druckabfall verglichen und aus dem Unterschied beider Druckänderungen eine Statusmeldung ausgegeben.

Die gemessenen Druckänderungen können gespeichert werden. Eine Tendenz wird derart bewertet, dass eine Statusmeldung erzeugt wird, die auch bei noch funktionierendem Magnetventil aufgrund der Tendenz der gespeicherten Daten ein Warnsignal erzeugt.

Vorzugsweise wird die Statusmeldung aufgrund eines Vergleichs der gemessenen Druckänderung mit einem gespeicherten erlaubten Wert der Änderung eines Toleranzwertes des Drucks erzeugt.

Insbesondere wird dieser erlaubte Toleranzwert während des ersten Schritts der Erzeugung der Referenzdaten durch Variation der Schaltzeit ermittelt.

Alternativ dazu kann der erlaubte Toleranzwert fest im Speicher abgelegt und nicht während der Durchführung des Verfahrens ermittelt werden.

Es ist aber auch möglich, dass der erlaubte Toleranzwert für die vorhandene Konfiguration aus gespeicherten Kennwerten und vom Anwender einzugebenden Daten berechnet wird.

Die Vorrichtung zur Durchführung des oben angegebenen Verfahrens nach der Erfindung umfasst den Stellungsregler und einen einzigen Drucksensor zur Messung des Drucks in der ersten pneumatischen Verbindung.

Weiterhin umfasst die Vorrichtung den Stellungsregler, das Magnetventil, das Stellgerät, das einen pneumatischen Antrieb mit einer Sicherheitsposition aufweist, eine Steuerung, die das Magnetventil mit variierender Zeitlänge aus- und einschaltet, und einen Speicher, der mindestens eine Schaltzeit speichert, bei der die Position des Stellgeräts konstant bleibt, eine Steuereinheit, insbesondere die Steuerung, die einen Test auslöst, bei dem zum einen das Magnetventil für die gespeicherte Schaltzeit aus- und wieder eingeschaltet wird und zum anderen die auftretende Druckänderung in der ersten pneumatischen Verbindung gemessen wird, und eine Ausgabeeinheit zur Ausgabe einer Statusmeldung.

Vorzugsweise ist der Drucksensor innerhalb des Stellungsreglers angeordnet.

Insbesondere ist der Stellungsregler als digitaler Stellungsregler ausgeführt.

Gemäß einer Ausführungsform der Erfindung ist eine Einheit vorgesehen, insbesondere eine Steuerung, zur Überprüfung des Magnetventils, so dass der Stellungsregler ein Signal zum Auslösen der Überwachung einer Druckänderung in der ersten pneumatischen Verbindung erhält.

Vorzugsweise ist der Stellungsregler derart ausgeführt, dass er die Information zur Auslösung des Tests des Magnetventils mittels eines auf der Signalleitung aufmodulierten Signals, mittels eines HART Signals, mittels eines Funk Signals oder mittels eines zusätzlichen Eingangs für einen Strom oder Spannungssignals empfängt.

Der Stellungsregler kann vor allem mit dem Magnetventil so elektrisch verbunden sein, dass er das Schalten des Magnetventils auslöst.

Weitere Vorteile, Merkmale und Anwendungsmöglichkeiten der Erfindung ergeben sich aus der nachfolgenden Beschreibung in Verbindung mit dem in den Zeichnungen dargestellten Ausführungsbeispiel.

Die Erfindung wird im Folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet. Es zeigen:
- Fig. 1: eine schematische Darstellung einer erfindungsgemäßen Vorrichtung,
- Fig. 2: eine Darstellung eines pneumatischen Stellgeräts der Vorrichtung,
- Fig. 3a: eine erste Druckabfallkurve, und
- Fig. 3b: eine zweite Druckabfallkurve.

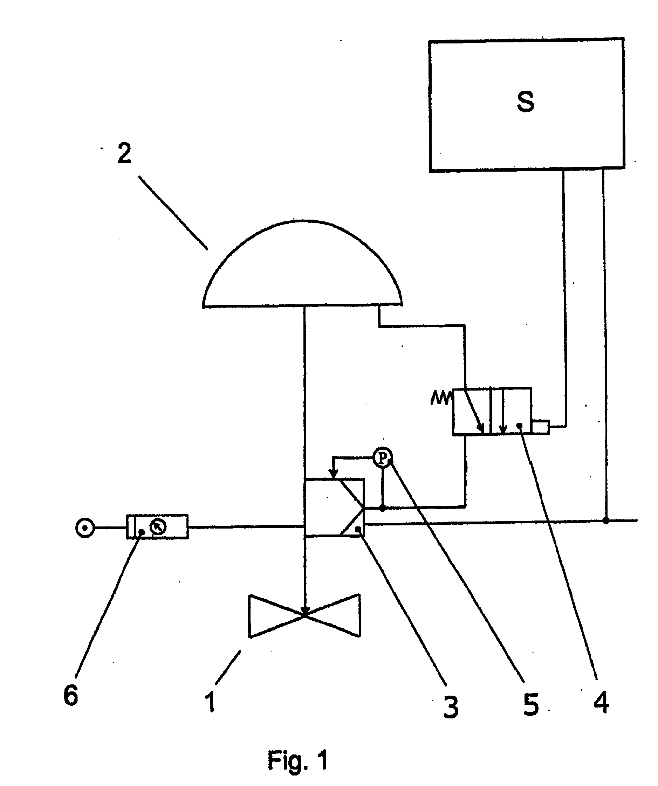

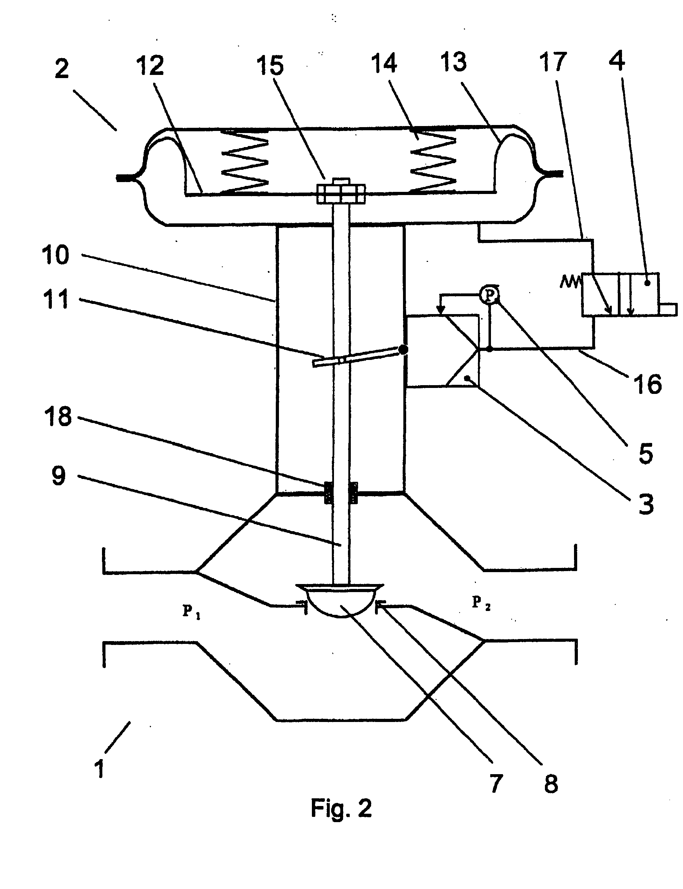

Fig. 1 zeigt eine Darstellung einer Vorrichtung zur Durchführung des erfindungsgemäßen Verfahrens. Insbesondere ist ein Stellgerät 1 dargestellt. Das Stellgerät 1 umfasst einen in Fig. 2 näher gezeigten pneumatischen Stellantrieb 2, einen Stellungsregler 3 und ein Magnetventil 4. Zur Messung des Drucks in einer ersten pneumatischen Verbindung 16 zwischen dem Stellungsregler 3 und dem Magnetventil 4 ist ein einziger Drucksensor 5 vorgesehen, der vorzugsweise an dem Stellungsregler 3 ein Signal abgibt. Es besteht eine direkte elektrische Verbindung vom Stellungsregler 3 zum Drucksensor 5, wie der Pfeil in den Figuren 1 und 2 veranschaulichen soll. Der Drucksensor 5 kann innerhalb des Stellungsreglers 3 angeordnet sein.

Ein Filterregler 6 liefert die pneumatische Versorgung des Stellungsreglers 3 und gegebenenfalls auch des Magnetventils 4, falls dieses pneumatische Hilfsenergie verwendet, was nicht näher gezeigt ist.

Sowohl das Magnetventil 4 als auch der Signaleingang des Stellungsreglers 3 sind mit einer Steuerung S verbunden Diese kann beispielsweise als Sicherheitssteuerung - SIS Safety Instrumented System - ausgelegt sein. Ebenso ist es möglich, dass getrennte Steuerungen mit Magnetventil 4 und Stellungsregler 3 verbunden sind und diese untereinander kommunizieren. Beispielsweise ist eine Sicherheitssteuerung mit dem Magnetventil 4 und/oder eine Standardprozesssteuerung mit dem Stellungsregler 3 verbunden.

Die Funktionsweise des Stellgerätes 3 ist anhand der Fig. 2 veranschaulicht. Das Stellgerät 1 umfasst einen Drosselkörper 7, der einen Ventilsitz 8 öffnet oder schließt und je nach seiner Position eine variierende Querschnittsfläche freigibt. Ein Eingangsdruck P1 eines Prozessmediums wirkt am Eingang des Stellgerätes 1, so dass ein Ausgangsdruck P2 am Ausgang in Abhängigkeit der geregelten Position des Drosselkörpers 7 entsteht. Die zwischen Drosselkörper 7 und Ventilsitz 8 freigegebene Fläche bestimmt den Durchfluss des Prozessmediums und damit auch einen Ausgangsdruck P2.

Der Stellungsregler 3 dient zum Regeln der Position des Drosselkörpers 7. Der Stellungsregler 3 erhält ein Sollwertsignal, was nicht näher gezeigt ist. Weiterhin misst der Stellungsregler 3 eine Ventilposition, beispielsweise mittels eines Hebels 11, der an einer Ventilstange 9, die von einem Faltenbalg 10 zum Schutz umhüllt ist, eine Bewegung des Drosselkörpers 7 detektiert und einen Druck erzeugt, der über eine erste pneumatische Verbindung 16 zwischen Stellungsregler 3 und Magnetventil 4 wirkt. Der Druck wirkt außerdem auf eine zwischen dem pneumatischen Antrieb 2 und dem Magnetventil 4 vorhandene zweite pneumatische Verbindung 17 und wirkt auf den Stellantrieb 2. Der Ausgangsdruck P wirkt über eine Fläche gegen die Kraft von Federn 14, die an einem Antriebsteller 12 anliegen, der innerhalb des Antriebes 2 durch einer Membran 13 getragen wird. Das Kraftgleichgewicht zwischen Federkraft und Druck bestimmt die Position der Ventilstange 9 und damit des Drosselkörpers 7, da die Ventilstange 9 an den Antriebsteller 12 gekoppelt ist, und zwar durch Verbindungsmittel, zum Beispiel durch eine Schraube 15.

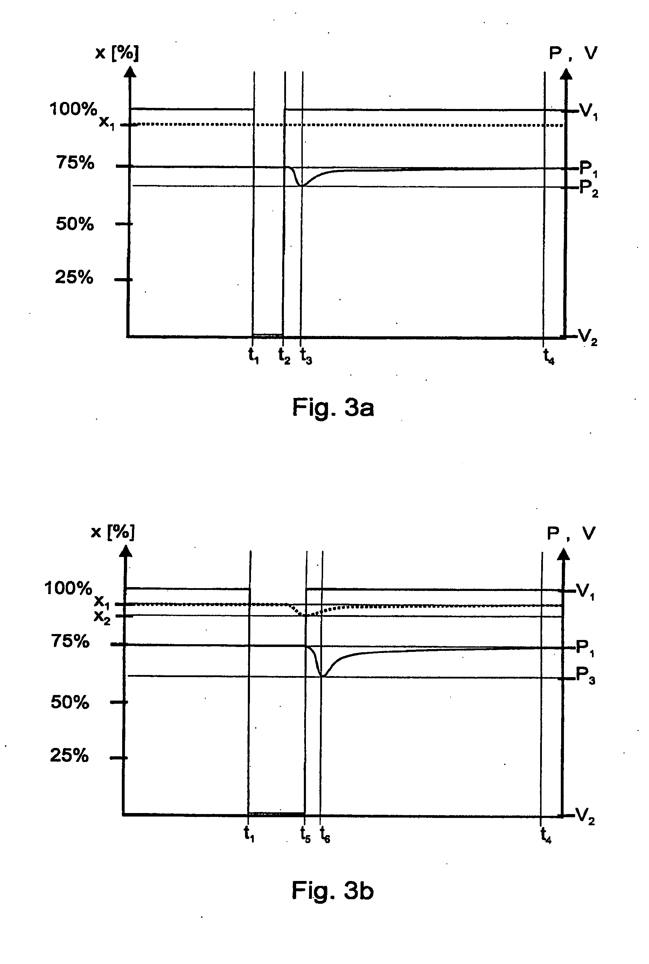

Figur 3a zeigt Signale, die während der Durchführung des Verfahrens relevant sind. Dabei ist eine Ventilposition x, ein Schaltsignal V des Magnetventils 4 und ein Druck P in der ersten pneumatischen Verbindung 16 des Stellungsreglers 3 und des Magnetventils 4 dargestellt.

In einem ersten Schritt des Verfahrens wird das Magnetventil 4 zur Zeit t1 abgeschaltet, indem eine am Magnetventil 4 anliegende Spannung von V1 auf V2 abgesenkt wird. Das Ventil 4 befindet sich dabei in einer Ventilposition x1. In dieser Position liegt ein Druck im Antrieb vor, der dem Druck P vor dem Magnetventil 4 entspricht. Vorzugsweise entspricht diese Position einer im Normalbetrieb üblichen Stellung des Ventils.

Das Magnetventil 4 wird zur Zeit t2 wieder eingeschaltet. Die Ventilposition x1 bleibt unverändert, wenn die Schaltzeit t2 - t1 nicht zu lang ist. Die Erklärung dieses Verhaltens ist darin zu sehen, dass der Antriebsdruck sich kaum merklich ändert, wenn das Magnetventil 4 nur kurz entlüftet und damit einen sehr kleinen Luftstrom abbläst. Ein kurzzeitiger Druckabfall in der zweiten pneumatischen Verbindung 17 ist nicht im Antriebsdruck spürbar, wenn die Änderung nur sehr kurz und das Rohrvolumen der pneumatischen Verbindung 17 sehr klein gegen das Antriebsvolumen ist.

Nach dem Wiedereinschalten des Magnetventils 4 zur Zeit t2 ist ein kurzzeitiger Druckabfall in der ersten pneumatischen Verbindung 16 auf den Druck P2 zur Zeit t3 feststellbar, weil sich der Druck vor dem Magnetventil 4 mit dem Druck nach dem Magnetventil 4 ausgleicht.

Während des erfindungsgemäßen Verfahrens wird die Schaltzeit t2 - t1 variiert und mindestens ein Wert gespeichert, bei dem die Ventilposition unverändert bleibt und die Schaltzeit lang genug ist, eine reproduzierbar messbare Änderung des Drucks P1 - P2 zu detektieren.

In Figur 3b ist dargestellt, wie sich die Ventilposition von x1 auf x2 verändert, wenn die Schaltzeit größer ist. Das Magnetventil 4 wird erst zur Zeit t5, die nach der Zeit t2 liegt, wiedereingeschaltet. Auch in diesem Fall ist ein Druckabfall P1 - P3 zur Zeit t6 feststellbar. Dieser Druckabfall ist sogar etwas größer als in Figur 3a, da die Ventilposition sich änderte, d.h. ein größerer Druckabfall vorhanden gewesen sein muss.

Auch mit dem Vorgehen gemäß Figur 3b lässt sich zwar auch die Funktionsfähigkeit des Magnetventils 4 überprüfen. Erfindungsgemäß soll aber im Wesentlichen keine Änderung der Ventilposition x1 - x2 vorliegen, da eine derartige Änderung einen Prozess stören könnte.

Die erfindungsgemäße Vorrichtung besteht im Wesentlichen aus dem Stellgerät 1, dem Drucksensor 5 zur Messung des Drucks in der ersten pneumatischen Verbindung 16, mindestens dem Magnetventil 4 und der mit dem Magnetventil 4 und Stellungsregler 3 verbundenen Steuerung S.

Die Signalverbindung von Magnetventil 4, Stellungsregler 3 und der Steuerung S kann auf unterschiedliche Weise erfolgen. Es können zum Beispiel Spannungssignale auf einer Kabelverbindung eingesetzt werden, und zwar beispielsweise mit einer Gleichspannung von 24 Volt - DC, die für Magnetventile üblich ist. Auch können Stromsignale auf die Kabelverbindung, insbesondere für Stellungsregler übliche 4-20 mA verwendet werden. Möglich ist es auch, dass eine digitale Kommunikation mittels eines Feldbusses, z.B. Profibus oder Foundation Fieldbus für beliebige Feldgeräte genutzt wird. Denkbar ist auch eine Funkverbindung, wie ZigBee, WLAN oder Bluetooth.

In einer besonders vorteilhaften Ausführung der Vorrichtung ist der Drucksensor 5 in den Stellungsregler 3 integriert, wobei das Schalten des Magnetventils 4 von der Steuerung S ausgelöst wird. Der Stellungsregler 3 erhält über eine Feldbusverbindung die Information der Schaltzeit t1. Der Stellungsregler 3 vergleicht die auftretenden Druckänderungen an seinem Ausgang und erzeugt eine Statusmeldung zum Zustand des Magnetventils 4, die er wiederum in digitaler Form per Feldbus übermittelt. Ein Verfahren zur Überwachung der Funktionsfähigkeit des Stellgerätes 1 vorzugsweise mit einem einfachwirkenden pneumatischen Antrieb 2 und dem Magnetventil 4 kann folgendermaßen durchgeführt werden.

In einem ersten Schritt werden Referenzdaten aufgenommen. Diese enthalten mindestens eine Information zu einer Schaltzeit des Magnetventils 4. Der pneumatische Antrieb 2 wird mit Druck beaufschlagt. Das Magnetventil 4 wird mit variierender Länge aus- und eingeschaltet. Es wird mindestens eine Schaltzeit - dt = t2 - t1 - gespeichert, bei der die Position des Stellgeräts 1 im Wesentlichen konstant bleibt. Nach dem Wiedereinschalten des Magnetventils 4 wird ein Druckabfall - dp = P1 - P2 - in der ersten pneumatischen Verbindung 16 vor dem Magnetventil 4 detektiert. In einem zweiten Schritt wird eine Routine durchgeführt, welche das Magnetventil 4 für die Dauer der im ersten Schritt gespeicherten Schaltzeit aus- und wieder einschaltet. Die auftretende Druckänderung dp in der pneumatischen Zuleitung bzw. Verbindung 16 wird vor dem Magnetventil 4 gemessen. Aus dieser Druckänderung wird auf den Zustand des Magnetventils 4 geschlossen. Die Änderung des Drucks in der ersten pneumatischen Verbindung 16 vor dem Magnetventil 4 wird als gemessenes Steuersignal genommen, aus dem der Zustand des Magnetventils 4 bestimmt wird. Eine Statusmeldung zur Beschreibung des Zustands des Magnetventils 4 wird erzeugt und in visueller oder elektronischer Form übermittelt.

Der Druckabfall - dp = P1 - P2 - in der ersten pneumatischen Verbindung 16 vor dem Magnetventil 4 wird während des ersten Schritts gespeichert. Die im zweiten Schritt auftretende Druckänderung dp in der ersten pneumatischen Verbindung 16 vor dem Magnetventil 4 wird mit dem gespeicherten Druckabfall verglichen, wobei aus dem Unterschied beider Druckänderungen eine erweiterte Statusmeldung ausgegeben wird. Diese erweiterte Statusmeldung kann signalisieren, dass das Magnetventil 4 zwar noch funktionsfähig ist, jedoch nicht mehr die gleichen Ventileigenschaften wie ein neues funktionsfähiges Magnetventil besitzt.

Die bei der Durchführung des Verfahrens gemessenen Druckänderungen werden gespeichert. Eine Tendenz wird derart bewertet, dass eine Statusmeldung erzeugt wird, die auch bei noch funktionierendem Magnetventil 4 aufgrund der Tendenz der gespeicherten Daten ein Warnsignal erzeugt und dieses visuell oder in elektronischer Form übermittelt wird.

Die Statusmeldung wird aufgrund eines Vergleichs der gemessenen Druckänderung mit einem gespeicherten erlaubten Wert der Änderung dieses Drucks - Toleranzwert - erzeugt. Dieser erlaubte Toleranzwert kann während des ersten Schritts der Erzeugung der Referenzdaten durch Variation der Schaltzeit ermittelt werden. Dieser erlaubte Toleranzwert kann aber auch fest in einem Speicher abgelegt sein, d.h. dieser wird nicht während der Durchführung des Verfahrens ermittelt. Dieser erlaubte Toleranzwert kann alternativ für die vorhandene Konfiguration aus gespeicherten Kennwerten und vom Anwender einzugebenden Daten berechnet werden.

Der Stellungsregler ist vorzugsweise als ein digitaler Stellungsregler ausgeführt. Er umfasst den Drucksensor 5 zur Messung des Drucks in der ersten pneumatischen Verbindung 16. Weiterhin ist eine Einheit, insbesondere die Steuerung S vorhanden, die das Magnetventil 4 mit variierender Zeitlänge aus- und einschaltet. Es wird mindestens eine Schaltzeit - dt = t2 - t1 - gespeichert, bei der die Position des Stellgeräts 1 konstant bleibt. Es ist eine weitere Einheit , die insbesondere in der Steuerung S enthalten ist, vorhanden, die einen Test auslöst, bei dem zum einen das Magnetventil 4 für die gespeicherte Schaltzeit aus- und wieder eingeschaltet wird und zum anderen die auftretende Druckänderung dp in der zweiten pneumatischen Verbindung vor dem Magnetventil 4 gemessen wird, so dass aus dieser Druckänderung auf den Zustand des Magnetventils 4 geschlossen wird. Die Änderung des Drucks in der ersten pneumatischen Verbindung 16 vor dem Magnetventil 4 wird als gemessenes Steuersignal genommen, aus dem der Zustand des Magnetventils 4 bestimmt werden kann. Weiterhin ist eine nicht gezeigte Ausgabeeinheit zur visuellen Darstellung oder eine elektronische Ausgabe einer Statusmeldung vorgesehen.

Die Überprüfung des Magnetventils 4 wird von der Steuerung S ausgelöst. Der Stellungsregler 3 erhält eine Mitteilung zum Auslösen der Überwachung einer Druckänderung in der ersten pneumatischen Verbindung 16.

Der Stellungsregler 3 empfängt die Information zur Auslösung des Magnetventiltests zum Beispiel mittels eines auf der Signalleitung aufmodulierten Signals. Alternativ kann der Stellungsregler 3 die Information zur Auslösung des Magnetventiltests mittels eines HART Signals empfangen. Eine weitere Alternative besteht darin, dass der Stellungsregler 3 diese mittels eines Funk Signals empfängt. Auch ist es möglich, dass der Stellungsregler 3 diese Information mittels eines zusätzlichen Eingangs für einen Strom oder Spannungssignals empfängt. Der Stellungsregler 3 löst jedoch das Schalten des Magnetventils 4 aus. Die Steuerung S empfängt die Information zu der detektierten Druckänderung dp in der pneumatischen Verbindung 16 vor dem Magnetventil 4 mittels des HART Signals, des Funk Signals bzw. des zusätzlichen Eingangs für einen Strom oder Spannungssignals. Der Stellungsregler 3 kann eine Statusmeldung zur Beschreibung des Zustands des Magnetventils 4 erzeugen und visuell oder in elektronischer Form übermitteln. Die Steuerung S kann außerdem eine Statusmeldung zur Beschreibung des Zustands des Magnetventils 4 erzeugen und visuell oder in elektronischer Form übermitteln. Die Steuerung S kann die Information zu der detektierten Druckänderung dp in der pneumatischen Verbindung 16 vor dem Magnetventil 4 auch mittels eines auf der Signalleitung aufmodulierten Signals empfangen.

Die erfindungsgemäße Lösung besteht also darin, dass das Magnetventil 4 mit einer Schaltzeit t2 - t1 aus- und wiedereingeschaltet wird und die Schaltzeit t2 - t1 des Magnetventiles erfasst wird, bei der einerseits die Schaltzeit so kurz ist, dass die Position des Stellgeräts 1 im Wesentlichen konstant bleibt und andererseits jedoch so lang ist, dass nach dem Wiedereinschalten des Magnetventils 4 ein Druckabfall dp = P1 - P2 in der pneumatischen Verbindung 16 vor dem Magnetventil 4 vorhanden ist, wobei die Druckmessung nur in der ersten pneumatischen Verbindung 16 erfolgt, und dass die erfasste Schaltzeit eingesetzt wird, um die Funktionsfähigkeit des Magnetventiles 4 anhand eines Druckabfalls dp = P1 - P2 in der ersten pneumatischen Verbindung 16 zu prüfen.

### Bezugszeichenliste

- 1: Stellgerät
- 2: Pneumatischer Antrieb
- 3: Stellungsregler
- 4: Magnetventil
- 5: Drucksensor
- 6: Filterregler
- 7: Drosselkörper
- 8: Ventilsitz
- 9: Ventilstange
- 10: Faltenbalg
- 11: Hebel
- 12: Antriebsteller
- 13: Membran
- 14: Federn
- 15: Schrauben
- 16: Erste pneumatische Verbindung
- 17: Zweite pneumatische Verbindung

- P1: Eingangsdruck
- P2: Ausgangsdruck
- S: Steuerung

## Patentansprüche

1. Verfahren zur Überwachung der Funktionsfähigkeit eines Stellgerätes (1) mit einem pneumatischen Antrieb (2), insbesondere für ein Sicherheitsventil, und mit einem Magnetventil (4) zur Steuerung des pneumatischen Antriebes (2), wobei das Magnetventil (4) durch eine Druckmessung überwacht wird und dafür über eine erste pneumatische Verbindung (16) mit einem Stellungsregler (3) des Stellgerätes (1) sowie mit dem pneumatischen Antrieb (2) durch eine zweite pneumatische Verbindung (17) verbunden ist, **dadurch gekennzeichnet, dass** das Magnetventil (4) mit einer Schaltzeit (t2 - t1) aus- und wieder eingeschaltet wird, die Schaltzeit (t2 - t1) des Magnetventiles (4) erfasst wird, bei der einerseits die Schaltzeit (t2 - t1) so kurz ist, dass die Position des Stellgeräts (1) im Wesentlichen konstant bleibt und andererseits jedoch so lang ist, dass nach dem Wiedereinschalten des Magnetventils (4) ein Druckabfall (dp = P1 - P2) in der ersten pneumatischen Verbindung (16) vor dem Magnetventil (4) vorhanden ist.

2. Verfahren nach Anspruch 1, **dadurch gekennzeichnet, dass** die Druckmessung nur in der ersten pneumatischen Verbindung (16) erfolgt, und dass die erfasste Schaltzeit (t2 - t1) eingesetzt wird, um die Funktionsfähigkeit des Magnetventiles (4) anhand eines Druckabfalls (dp = P1 - P2) in der ersten pneumatischen Verbindung (16) zu prüfen.

3. Verfahren nach Anspruch 1 oder 2, **dadurch gekennzeichnet, dass** in einem ersten Schritt das Magnetventil (4) mit variierender Zeitlänge aus- und wiedereingeschaltet wird und dadurch mehrere Referenzdaten aufgenommen werden, die mindestens eine Information zu der Schaltzeit (t2 - t1) des Magnetventils (4) enthält, und mindestens die Schaltzeit (dt = t2 - t1) gespeichert wird, bei der die Position des Stellgeräts (1) im Wesentlichen konstant bleibt und nach dem Wiedereinschalten des Magnetventils (4) der Druckabfall (dp = P1 - P2) erfolgt, und in einem zweiten Schritt eine Prüfroutine durchgeführt wird, welche das Magnetventil (4) für die Dauer der im ersten Schritt gespeicherten Schaltzeit aus- und wiedereinschaltet, wobei die auftretende Druckänderung (dp) in der ersten pneumatischen Verbindung (16) vor dem Magnetventil (4) gemessen wird, so dass aus dieser Druckänderung (dp) auf den Zustand des Magnetventils (4) geschlossen wird, und eine Statusmeldung zur Beschreibung des Zustands des Magnetventils (4), insbesondere in visueller oder elektrischer Form erzeugt wird.

4. Verfahren nach Anspruch 3, **dadurch gekennzeichnet, dass** der Druckabfall (dp = P1 - P2) in der pneumatischen Verbindung (16) während des ersten Schritts gespeichert wird und die im zweiten Schritt auftretende Druckänderung (dp) in der pneumatischen Verbindung (16) mit dem gespeicherten Druckabfall (dp) verglichen wird und aus dem Unterschied beider Druckänderungen(dp) eine Statusmeldung ausgegeben wird.

5. Verfahren nach Anspruch 4, **dadurch gekennzeichnet, dass** die im zweiten Schritt auftretende Druckänderung (dp) in der ersten pneumatischen Verbindung (16) vor dem Magnetventil (4) mit dem gespeicherten Druckabfall (dp) verglichen wird und aus dem Unterschied beider Druckänderungen (dp) eine Statusmeldung ausgegeben wird.

6. Verfahren nach Anspruch 4 oder 5, **dadurch gekennzeichnet, dass** die gemessenen Druckänderungen (dp) gespeichert werden und eine Tendenz derart bewertet wird, dass eine Statusmeldung erzeugt wird, die auch bei noch funktionierendem Magnetventil (4) aufgrund der Tendenz der gespeicherten Daten ein Warnsignal erzeugt.

7. Verfahren nach einem der Ansprüche 4 bis 6, **dadurch gekennzeichnet, dass** die Statusmeldung aufgrund eines Vergleichs der gemessenen Druckänderung (dp) mit einem gespeicherten erlaubten Wert der Änderung eines Toleranzwertes des Drucks erzeugt wird.

8. Verfahren nach Anspruch 7, **dadurch gekennzeichnet, dass** dieser erlaubte Toleranzwert während des ersten Schritts der Erzeugung der Referenzdaten durch Variation der Schaltzeit ermittelt wird, oder dass der erlaubte Toleranzwert fest im Speicher abgelegt ist und nicht während der Durchführung des Verfahrens ermittelt wird, oder dass der erlaubte Toleranzwert für die vorhandene Konfiguration aus gespeicherten Kennwerten und vom Anwender einzugebenden Daten berechnet wird.

9. Vorrichtung zur Durchführung des Verfahrens nach einem der vorangehenden Ansprüche, **gekennzeichnet durch** den Stellungsregler (3) und einen einzigen Drucksensor (5) zur Messung des Drucks in der ersten pneumatischen Verbindung (16).

10. Vorrichtung nach Anspruch 9, **gekennzeichnet durch** den Stellungsregler (3), das Magnetventil (4), das Stellgerät (1), das einen pneumatischen Antrieb mit einer Sicherheitsposition aufweist, eine Steuerung (S), die das Magnetventil (4) mit variierender Zeitlänge aus- und einschaltet, und einen Speicher, der mindestens eine Schaltzeit (dt = t2 - t1) speichert, bei der die Position des Stellgeräts (1) konstant bleibt, eine Steuereinheit, insbesondere die Steuerung (S), die einen Test auslöst, bei dem zum einen das Magnetventil (4) für die gespeicherte Schaltzeit (dt = t2 - t1) aus- und wieder eingeschaltet wird und zum anderen die auftretende Druckänderung (dp) in der ersten pneumatischen Verbindung (16) gemessen wird, und ein Ausgabeeinheit zur Ausgabe einer Statusmeldung.

11. Vorrichtung nach Anspruch 9 oder 10, **dadurch gekennzeichnet, dass** der Drucksensor (5) innerhalb des Stellungsreglers (3) angeordnet ist.

12. Vorrichtung nach einem der Ansprüche 9 bis 11, **dadurch gekennzeichnet, dass** der Stellungsregler (3) als digitaler Stellungsregler ausgeführt ist.

13. Vorrichtung nach einem der Ansprüche 9 bis 12, **gekennzeichnet durch** eine Einheit, insbesondere eine Steuerung (S), zur Überprüfung des Magnetventils (4), so dass der Stellungsregler (3) ein Signal zum Auslösen der Überwachung einer Druckänderung in der ersten pneumatischen Verbindung (16) erhält.

14. Vorrichtung nach Anspruch 13, **dadurch gekennzeichnet, dass** der Stellungsregler (3) derart ausgeführt ist, dass er die Information zur Auslösung des Tests des Magnetventils (4) mittels eines auf der Signalleitung aufmodulierten Signals, mittels eines HART Signals, mittels eines Funk Signals oder mittels eines zusätzlichen Eingangs für einen Strom oder Spannungssignals empfängt.

15. Vorrichtung nach einem der Ansprüche 9 bis 14, **dadurch gekennzeichnet, dass** der Stellungsregler (3) mit dem Magnetventil (4) so elektrisch verbunden ist, dass er das Schalten des Magnetventils (4) auslöst.

## Claims

1. A method for monitoring the functionality of a positioning device (1) having a pneumatic drive (2), in particular for a safety valve, and a magnetic valve (4) for controlling said pneumatic drive (2), said magnetic valve (4) being monitored by means of a pressure measurement for which purpose said valve (4) is connected, via a first pneumatic connection (16), to a positioner (3) of said positioning device (1) and, via a second pneumatic connection (17), to said pneumatic drive (2) **characterized in that** said magnetic valve (4) is deactivated and reactivated at a certain switching time (t2 - t1) and that the specific switching time (t2 - t1) of said magnetic valve (4) is determined which - on the one hand - is short enough to ensure that the positioning device (1) will remain essentially constant in position and, on the other hand, however, is long enough to ensure a pressure drop (dp = P1 - P2) in said first pneumatic connection (16) before said magnetic valve (4) after reactivation of said magnetic valve (4).

2. The method of claim 1 **characterized in that** said pressure measurement is only performed in said first pneumatic connection (16) and that the determined switching time (t2 - t1) is used for verifying the functionality of said magnetic valve (4) based on a pressure drop (dp = P1 - P2) in said first pneumatic connection (16).

3. The method of claims 1 or 2 **characterized in that** in a first step thereof, said magnetic valve (4) is deactivated and reactivated for varying periods of time which allows various sets of reference data to be collected which will provide at least some information on the switching time (t2-t1) of said magnetic valve (4), and at least the specific switching time (dt = t2 - t1) is stored during which said positioning device (1) will remain essentially constant in position and the pressure drop (dp = P1 - P2) will occur after reactivation of said magnetic valve (4), and in a second step thereof, a test routine is run which will deactivate and reactivate said magnetic valve (4) for the duration of the specific switching time stored in said first step, during which the pressure change (dp) occurring in the first pneumatic connection (16) before the magnetic valve (4) is measured so that a conclusion can be drawn from this pressure change (dp) as to the state of the magnetic valve (4), and a status message, in particular in a visual or electric form, for describing the status of the magnetic valve (4) is generated.

4. The method of claim 3 **characterized in that** the pressure drop (dp = P1 - P2) in said pneumatic connection (16) is stored in said first step and the pressure drop (dp) occurring in the pneumatic connection (16) during the second step is compared to the stored pressure drop (dp) value and a status message is issued based on the difference between the two pressure drop (dp) values.

5. The method of claim 4 **characterized in that** pressure change (dp) occurring in the first pneumatic connection (16) before the magnetic valve (4) in the second step is compared to the stored pressure drop (dp) value and a status message is issued based on the difference between the two pressure change (dp) values.

6. The method of claims 4 or 5 **characterized in that** the measured pressure change (dp) values are recorded and a tendency thereof is assessed such that a status message will be generated which will result in a warning signal to be generated in view of the tendency of the stored data even if the magnetic valve (4) is still functional.

7. The method of one of claims 4 to 6 **characterized in that** said status message is generated based on a comparison of the measured pressure change (dp) values to a stored admissible value of the change of a pressure tolerance value.

8. The method of claim 7 **characterized in that** this admissible tolerance value is determined during the first step of generating the reference data by varying the switching time, or that the admissible tolerance value is permanently stored in the memory and is not determined when said method is being performed, or that the admissible tolerance value for the specific configuration is calculated from stored characteristic parameters as well as data to be entered by the user.

9. A device for performing the method of one of the preceding claims **characterized by** the positioner (3) and a single pressure sensor (5) for measuring the pressure prevailing in said first pneumatic connection.

10. The device of claim 9 **characterized by** the positioner (3), the magnetic valve (4), the positioning device (1) including a pneumatic drive with a safety position, a controller (S) which deactivates and reactivates said magnetic valve (4) at varying time intervals, and a memory which stores at least one switching time (dt = t2 - t1) in which the positioning device (1) remains constant in position, a control unit, in particular said controller (S), which initiates a test which, on the one hand, causes said magnetic valve (4) to be deactivated and reactivated for the stored switching time (dt = t2 - t1) and, on the other hand, measures the pressure change (dp) occurring in the first pneumatic connection (16), as well as an output unit for outputting a status message.

11. The device of claims 9 or 10 **characterized in that** said pressure sensor (5) is provided within said positioner (3).

12. The device of one of claims 9 to 11 **characterized in that** said positioner (3) is in the form of a digital positioner.

13. The device one of the claims 9 to 12 **characterized by** a unit, in particular a controller (S), for verifying said magnetic valve (4) such that the positioner (3) receives a signal for triggering the monitoring of a pressure change in said first pneumatic connection (16).

14. The device of claim 13 **characterized in that** said positioner (3) is designed such that it receives the information for triggering the testing of said magnetic valve (4) by means of a signal modulated on the signal line, a HART signal, a radio signal or an additional input for a current or a voltage signal.

15. The device of one of claims 9 to 14 **characterized in that** said positioner (3) is electrically connected to said magnetic valve (4) such that it will trigger the switching of said magnetic valve (4).

## Revendications

1. Procédé de surveillance de fonctionnement d'un appareil de réglage (1) doté d'un entraînement pneumatique (2), notamment pour une vanne de sécurité et d'une électrovanne (4) pour la commande de l'entraînement pneumatique (2) sachant que l'électrovanne (4) est contrôlée par une mesure de pression et pour cela est reliée par une première connexion pneumatique (16) à un régulateur de position (3) de l'appareil de réglage (1) et à l'entraînement pneumatique, **caractérisé en ce que** l'électrovanne (4) est déconnectée et reconnectée avec un temps de réponse (t2 - t1), le temps de réponse (t1 - t2) de l'électrovanne (4) est saisi, pour lequel d'une part le temps de réponse (t2 - t1) est si court que la position de l'appareil de réglage (1) reste essentiellement constante et d'une autre part est cependant si long qu'après la reconnexion de l'électrovanne (4) une chute de pression (dp = P1 - P2) est présente dans la première connexion pneumatique (16) avant l'électrovanne (4).

2. Procédé selon revendication 1, **caractérisé en ce que** la mesure de pression n'a lieu que dans la première connexion pneumatique (16) et que le temps de réponse saisi (12 -t1) est utilisé pour vérifier le fonctionnement de l'électrovanne (4) au moyen d'une chute de pression (dp = P1 - P2) dans la première connexion pneumatique (16).

3. Procédé selon revendication 1 ou 2, **caractérisé en ce que** dans une première étape, l'électrovanne (4) est déconnectée et reconnectée avec des différentes durées et par cela, plusieurs données de référence sont enregistrées, qui contiennent au moins une information sur le temps de réponse (t2 - t1) de l'électrovanne (4) et au moins le temps de réponse (dt = t2 - t1) est mis en mémoire pour lequel la position de l'appareil de réglage (1) reste essentiellement constante et après la reconnexion de l'électrovanne (4) la chute de pression a lieu (dp = P1 - P2) et dans une deuxième étape une routine de contrôle est effectuée, qui déconnecte te reconnecte l'électrovanne (4) pour la durée du temps de réponse mémorisé dans la première étape, sachant que la modification de pression (dp) survenant est mesurée dans la première connexion pneumatique (16) avant l'électrovanne (4), de manière à ce qu'à partir de cette modification de pression (dp) on puisse conclure sur l'état de l'électrovanne (4) et un message d'état est émis pour la description de l'état de l'électrovanne (4) notamment sous forme visuelle ou électrique.

4. Procédé selon revendication 3, **caractérisé en ce que** la chute de pression (dp = P1 - P2) est mise en mémoire dans la connexion pneumatique (16) pendant la première étape et la modification de pression (dp) survenant dans la deuxième étape est comparée dans la connexion pneumatique (16) avec la chute de pression mémorisée (dp) et qu'à partir de la différence des deux modifications de pression (dp), un message d'état est émis.

5. Procédé selon revendication 4, **caractérisé en ce que** la modification de pression (dp) survenant dans la deuxième étape est comparée dans la première connexion pneumatique (16) avant l'électrovanne (4) avec la chute de pression mémorisée (dp) et à partir de la différence des deux modifications de pression (dp), un message d'état est émis.

6. Procédé selon revendication 4 ou 5, **caractérisé en ce que** les modifications de pression mesurées (dp) sont mises en mémoire et une tendance est évaluée de telle manière qu'un message d'état est créé, qui crée un signal d'avertissement aussi en cas d'électrovanne (4) fonctionnant encore en raison de la tendance des données mises en mémoire.

7. Procédé selon l'une des revendications 4 à 6, **caractérisé en ce que** le message d'état est créé en raison d'une comparaison de la modification de pression mesurée (dp) avec une valeur admissible en mémoire de la modification d'une valeur de tolérance de la pression.

8. Procédé selon revendication 7, **caractérisé en ce que** cette valeur de tolérance admissible est déterminée pendant la première étape de la génération des données de référence par variation du temps de réponse, ou que la valeur de tolérance admissible est stockée en mémoire de manière fixe et n'est pas déterminée pendant l'exécution du procédé, ou que la valeur de tolérance admissible et calculée pour la configuration disponible à partir de paramètres enregistrés et de données introduites par l'utilisateur.

9. Dispositif pour l'exécution du procédé selon l'une des revendications précédentes, **caractérisé par** le régulateur de position (3) et un capteur de pression (5) unique pour mesurer la pression dans la première connexion pneumatique (16).

10. Dispositif selon revendication 9, **caractérisé par** le régulateur de position (3), l'électrovanne (4), l'appareil de réglage (1) qui présente un entraînement pneumatique avec une position de sécurité, une commande (S), qui déconnecte et connecte l'électrovanne (4) avec différentes durées et une mémoire qui enregistre au moins un temps de réponse (dt = t2 - t1) pour lequel la position de l'appareil de réglage (1) reste constante, une unité de commande, notamment la commande (S) qui déclenche un test dans le cas duquel d'une part l'électrovanne (4) est déconnectée et reconnectée pour le temps de réponse enregistré (dt = t2 - t1) et d'autre part la modification de pression survenant (dp) est mesurée dans la première connexion pneumatique (16) et une unité de sortie pour l'émission d'un message d'état.

11. Dispositif selon revendication 9 ou 10, **caractérisé en ce que** le capteur de pression (5) est placé à l'intérieur du régulateur de position (3).

12. Dispositif selon l'une des revendications 9 à 11, **caractérisé en ce que** le régulateur de position (3) est exécuté en tant que régulateur de position numérique.

13. Dispositif selon l'une des revendications 9 à 12, **caractérisé par** une unité, notamment une commande (S), pour le contrôle de l'électrovanne (4), de manière à ce que le régulateur de position (3) reçoit un signal pour le déclenchement de la surveillance d'une modification de pression dans la première connexion pneumatique (16).

14. Dispositif selon revendication 13, **caractérisé en ce que** le régulateur de position (3) est exécuté de telle manière qu'il reçoit l'information pour le déclenchement du test de l'électrovanne (4) au moyen d'un signal modulé sur le circuit d'acheminement des signaux, au moyen d'un signal HART, au moyen d'un signal radio ou au moyen d'une entrée additionnelle pour un signal de courant ou de tension.

15. Dispositif selon l'une des revendications 9 à 14, **caractérisé en ce que** le régulateur de position (3) est relié électriquement à l'électrovanne (4) de manière à ce qu'il déclenche la commutation de l'électrovanne (4).
